# EUROPEAN PATENT APPLICATION

(11) **EP 2 922 298 A1**
(43) Date of publication of application: **23.09.2015**
(21) Application number: 13860472.3
(22) Date of filing: 05.11.2013
(51) Int. Cl.: H04N 21/234, H04N 21/238, H04N 21/239, H04N 21/4402, H04N 21/44, H04N 21/462, H04N 21/6547, H04N 19/85

(54) **METHOD AND DEVICE FOR ENHANCING VIDEO QUALITY**

(30) Priority: 06.12.2012 CN 201210520141
(71) Applicant: Huawei Technologies Co., Ltd., Longgang District Shenzhen, Guangdong 518129 (CN)
(72) Inventor: XIE, Qingpeng, Shenzhen Guangdong 518129 (CN); YAO, Jun, Shenzhen Guangdong 518129 (CN); LI, Shanfu, Shenzhen Guangdong 518129 (CN)
(74) Representative: Körber, Martin Hans
(86) International application number: PCT/CN2013/086567
(87) International publication number: WO 2014/086220

(57) **Abstract**

The present invention discloses a video quality enhancement method and apparatus, and pertains to the multimedia video processing field. The method includes: receiving video interpolation information that is of a video and sent by a third party, where the third party is used to acquire the video interpolation information of the video; and performing a motion interpolation on the video according to the video interpolation information of the video to obtain a new video, where video quality of the new video is superior to video quality of the video. The apparatus includes: a first receiving module and an interpolation module. According to the present invention, calculation complexity of a process in which a terminal performs video quality enhancement can be reduced.

## Description

This application claims priority to Chinese Patent Application No. 201210520141.7, filed with the Chinese Patent Office on December 6, 2013 and entitled "VIDEO QUALITY ENHANCEMENT METHOD AND APPARATUS", which is incorporated herein by reference in its entirety.

### TECHNICAL FIELD

The present invention relates to the multimedia video processing field, and in particular, to a video quality enhancement method and apparatus.

### BACKGROUND

With development of society and progress of science and technology, a user has an increasingly high requirement on video quality in a multimedia service. Currently, the user may convert an original video with low quality into a video with high quality by using a video quality enhancement technology, so as to meet the requirement of the user on the video quality.

In the prior art, a video quality enhancement technology is provided and is specifically as follows: Video quality of a video with a low frame rate is relatively low, and a terminal first performs a motion estimation on the video with a low frame rate to obtain an inter-frame motion vector, and performs a motion interpolation on the video with a low frame rate according to the obtained inter-frame motion vector to obtain a video with a high frame rate, where video quality of the video with a high frame rate is higher than video quality of the video with a low frame rate.

In a process of implementing the present invention, the inventor finds that the prior art has at least the following problems:
Because the terminal performs a motion estimation and a motion interpolation on the video, calculation complexity for performing video quality enhancement in the terminal is relatively high. This requires that the terminal should have an extremely high processing capability. However, due to a limitation on terminal hardware, a current processing capability of the terminal hardly implements such high calculation complexity.

### SUMMARY

To reduce calculation complexity of a process in which a terminal performs video quality enhancement, the present invention provides a video quality enhancement method and apparatus. The technical solutions are as follows:
According to a first aspect, a video quality enhancement method is provided and the method includes:
   receiving video interpolation information that is of a video and sent by a third party, where the third party is used to acquire the video interpolation information of the video; and
   performing a motion interpolation on the video according to the video interpolation information of the video to obtain a new video, where video quality of the new video is superior to video quality of the video.

With reference to the first aspect, in a first possible implementation manner of the foregoing first aspect, before the receiving video interpolation information that is of a video and sent by a third party, the method further includes:
sending, to the third party, a request message that is used to acquire the video interpolation information, where the request message carries a video identifier of the video, so that the third party acquires the video interpolation information corresponding to the video identifier of the video according to the request message, and sends the video interpolation information corresponding to the video identifier of the video; or
sending a download request message to a video stream server, where the download request message carries a video identifier of the video and an identifier that is used to acquire the video interpolation information, so that the video stream server acquires a video bitstream of the video and the video interpolation information according to the download request message; or
sending a download request message to a video stream server and sending, to the third party, a request message that is used to acquire the video interpolation information, where the download request message carries a video identifier of the video, and the request message that is used to acquire the video interpolation information carries the video identifier of the video, so that the video stream server acquires a video bitstream of the video according to the download request message and sends the video bitstream of the video to a terminal, and the video stream server acquires the video interpolation information of the video according to the request message that is used to acquire the video interpolation information; or
sending a download request message to a video stream server, where the download request message carries a video identifier of the video and an address of the third party corresponding to the video, so that the video stream server sends a video bitstream of the video to a terminal and sends the video identifier of the video to the third party, and the third party acquires the video interpolation information of the video according to the video identifier of the video.

With reference to the first aspect or the first possible implementation manner of the first aspect, in a second possible implementation manner of the foregoing first aspect, the receiving video interpolation information that is of a video and sent by a third party includes:
receiving video interpolation information that is of a video and sent by the video stream server, where the video interpolation information of the video is the video interpolation information that is of the video, sent by the third party, and received by the video stream server.

With reference to the first aspect, the first possible implementation manner of the first aspect, or the second possible implementation manner of the first aspect, in a third possible implementation manner of the foregoing first aspect, before the performing a motion interpolation on the video according to the video interpolation information of the video to obtain a new video, the method further includes:
receiving a video bitstream that is of the video and sent by the third party, where the video bitstream of the video is the video bitstream that is of the video, sent by the video stream server, and received by the third party.

With reference to the first aspect and any one of the first to the third possible implementation manners of the first aspect, in a fourth possible implementation manner of the foregoing first aspect, the performing an interpolation on the video according to the video interpolation information of the video to obtain a new video includes:
if the video interpolation information of the video is received after the video is played, performing a motion interpolation on a non-played video according to video interpolation information of the non-played video;
if video interpolation information of some video frames included in the video is damaged, performing a motion interpolation on the video according to video interpolation information of a non-damaged video frame; or
if a video frame of the video is lost or damaged, generating video interpolation information of the lost or damaged video frame of the video according to the video interpolation information of the video, and performing a motion interpolation on the video according to the video interpolation information of the lost or damaged video frame of the video to recover the lost or damaged video frame of the video.

With reference to the first aspect and any one of the first to the fourth possible implementation manners of the first aspect, in a fifth possible implementation manner of the foregoing first aspect, the video interpolation information of the video includes at least a frame sequence number of a video frame, and a motion vector reference direction and a motion vector size of an interpolation block included in the video frame; or
the video interpolation information of the video includes at least a frame sequence number of a video frame, and a motion vector reference direction and a motion vector size of a pixel included in the video frame.

According to a second aspect, a video quality enhancement method is provided and the method includes:
receiving a request message that is used to acquire video interpolation information of a video, where the request message carries a video identifier of the video;
acquiring the video interpolation information of the video according to the video identifier of the video; and
sending the video interpolation information of the video to a terminal, so that the terminal performs a motion interpolation on the video according to the video interpolation information of the video to obtain a new video, where video quality of the new video is superior to video quality of the video.

With reference to the second aspect, in a first possible implementation manner of the foregoing second aspect, the acquiring the video interpolation information of the video according to the video identifier of the video includes:
querying, according to the video identifier of the video, whether the video interpolation information of the video exists in a stored correspondence between a video identifier and video interpolation information, and if it exists, acquiring the found video interpolation information of the video; and
if it does not exist, acquiring a video bitstream of the video from a video stream server according to the video identifier of the video, and acquiring the video interpolation information of the video according to the video bitstream of the video.

With reference to the first possible implementation manner of the second aspect, in a second possible implementation manner of the foregoing second aspect, after the acquiring the video interpolation information of the video according to the video bitstream of the video, the method further includes:
storing a correspondence between the video identifier and the video interpolation information of the video.

With reference to the second aspect, the first possible implementation manner of the second aspect, or the second possible implementation manner of the second aspect, in a third possible implementation manner of the foregoing second aspect, the sending the video interpolation information of the video to a terminal includes:
sending the video interpolation information of the video to the terminal through a video transmission path or a transmission channel to the terminal.

According to a third aspect, a video quality enhancement method is provided and the method includes:
receiving a download request message, where the download request message carries a video identifier of a video;
acquiring a video bitstream of the video according to the video identifier of the video; sending the video identifier of the video to a third party, so that the third party acquires video interpolation information of the video according to the video identifier of the video and sends the video interpolation information of the video to a terminal; and sending the video bitstream of the video to the terminal, so that the terminal performs a motion interpolation on the video according to the video bitstream and the video interpolation information of the video to obtain a new video, where video quality of the new video is superior to video quality of the video.

With reference to the third aspect, in a first possible implementation manner of the foregoing third aspect, before the sending the video identifier of the video to a third party, the method further includes:
querying whether a third party that includes the video interpolation information of the video exists on a cloud, and if it exists, selecting a third party that includes the video interpolation information of the video; and if it does not exist, selecting a third party from the cloud.

With reference to the third aspect or the first possible implementation manner of the third aspect, in a second possible implementation manner of the foregoing third aspect, after the sending the video identifier of the video to a third party, the method further includes:
if the third party does not obtain the video interpolation information of the video, sending the video bitstream of the video to the third party, so that the third party acquires the video interpolation information of the video according to the video bitstream of the video and sends the video interpolation information of the video to the terminal.

According to a fourth aspect, a video quality enhancement apparatus is provided and the apparatus includes:
a first receiving module, configured to receive video interpolation information that is of a video and sent by a third party, where the third party is used to acquire the video interpolation information of the video; and
an interpolation module, configured to perform a motion interpolation on the video according to the video interpolation information that is of the video and received by the receiving module to obtain a new video, where video quality of the new video is superior to video quality of the video.

With reference to the fourth aspect, in a first possible implementation manner of the foregoing fourth aspect, the apparatus further includes:
a sending module, configured to send, to the third party, a request message that is used to acquire the video interpolation information, where the request message carries a video identifier of the video, so that the third party acquires the video interpolation information corresponding to the video identifier of the video according to the request message, and sends the video interpolation information corresponding to the video identifier of the video; or
send a download request message to a video stream server, where the download request message carries a video identifier of the video and an identifier that is used to acquire the video interpolation information, so that the video stream server acquires a video bitstream of the video and the video interpolation information according to the download request message; or
send a download request message to a video stream server and send, to the third party, a request message that is used to acquire the video interpolation information, where the download request message carries a video identifier of the video, and the request message that is used to acquire the video interpolation information carries the video identifier of the video, so that the video stream server acquires a video bitstream of the video according to the download request message and sends the video bitstream of the video to a terminal, and the video stream server acquires the video interpolation information of the video according to the request message that is used to acquire the video interpolation information; or
send a download request message to a video stream server, where the download request message carries a video identifier of the video and an address of the third party corresponding to the video, so that the video stream server sends a video bitstream of the video to a terminal and sends the video identifier of the video to the third party, and the third party acquires the video interpolation information of the video according to the video identifier of the video.

With reference to the fourth aspect or the first possible implementation manner of the fourth aspect, in a second possible implementation manner of the foregoing fourth aspect, the first receiving module is specifically configured to receive video interpolation information that is of a video and sent by the video stream server, where the video interpolation information of the video is the video interpolation information that is of the video, sent by the third party, and received by the video stream server.

With reference to the fourth aspect, the first possible implementation manner of the fourth aspect, or the second possible implementation manner of the fourth aspect, in a third possible implementation manner of the foregoing fourth aspect, the apparatus further includes:
a second receiving module, configured to receive a video bitstream that is of the video and sent by the third party, where the video bitstream of the video is the video bitstream that is of the video, sent by the video stream server, and received by the third party.

With reference to the fourth aspect and any one of the first to the third possible implementation manners of the fourth aspect, in a fourth possible implementation manner of the foregoing fourth aspect, the interpolation module includes:
a first motion interpolation unit, configured to: if the video interpolation information of the video is received after the video is played, perform a motion interpolation on a non-played video according to video interpolation information of the non-played video;
a second motion interpolation unit, configured to: if video interpolation information of some video frames included in the video is damaged, perform a motion interpolation on the video according to video interpolation information of a non-damaged video frame; or
a third motion interpolation unit, configured to: if a video frame of the video is lost, generate video interpolation information of the lost video frame of the video according to the video interpolation information of the video, and perform a motion interpolation on the video according to the video interpolation information of the lost video frame of the video to recover the lost video frame of the video.

With reference to the fourth aspect and any one of the first to the fourth possible implementation manners of the fourth aspect, in a fifth possible implementation manner of the foregoing fourth aspect, the video interpolation information of the video includes at least a frame sequence number of a video frame, and a motion vector reference direction and a motion vector size of an interpolation block included in the video frame; or
the video interpolation information of the video includes at least a frame sequence number of a video frame, and a motion vector reference direction and a motion vector size of a pixel included in the video frame.

According to a fifth aspect, a video quality enhancement apparatus is provided and the apparatus includes:
a receiving module, configured to receive a request message that is used to acquire video interpolation information of a video, where the request message carries a video identifier of the video;
an acquiring module, configured to acquire the video interpolation information of the video according to the video identifier of the video; and
a sending module, configured to send the video interpolation information of the video to a terminal, so that the terminal performs a motion interpolation on the video according to the video interpolation information of the video to obtain a new video, where video quality of the new video is superior to video quality of the video.

With reference to the fifth aspect, in a first possible implementation manner of the foregoing fifth aspect, the acquiring module includes:
a first acquiring unit, configured to query, according to the video identifier of the video, whether the video interpolation information of the video exists in a stored correspondence between a video identifier and video interpolation information, and if it exists, acquire the found video interpolation information of the video; and
a second acquiring unit, configured to: if it does not exist, acquire a video bitstream of the video from a video stream server according to the video identifier of the video, and acquire the video interpolation information of the video according to the video bitstream of the video.

With reference to the first possible implementation manner of the fifth aspect, in a second possible implementation manner of the foregoing fifth aspect, the apparatus further includes:
a storage module, configured to store a correspondence between the video identifier and the video interpolation information of the video.

With reference to the fifth aspect, the first possible implementation manner of the fifth aspect, or the second possible implementation manner of the fifth aspect, in a third possible implementation manner of the foregoing fifth aspect, the sending module is specifically configured to send the video interpolation information of the video to the terminal through a video transmission path or a transmission channel to the terminal.

According to a sixth aspect, a video quality enhancement apparatus is provided and the apparatus includes:
a receiving module, configured to receive a download request message, where the download request message carries a video identifier of a video;
an acquiring module, configured to acquire a video bitstream of the video according to the video identifier of the video;
a first sending module, configured to send the video identifier of the video to a third party, so that the third party acquires video interpolation information of the video according to the video identifier of the video and sends the video interpolation information of the video to a terminal; and
a second sending module, configured to send the video bitstream of the video to the terminal, so that the terminal performs a motion interpolation on the video according to the video bitstream and the video interpolation information of the video to obtain a new video, where video quality of the new video is superior to video quality of the video.

With reference to the sixth aspect, in a first possible implementation manner of the foregoing sixth aspect, the apparatus further includes:
a querying module, configured to query whether a third party that includes the video interpolation information of the video exists on a cloud, and if it exists, select a third party that includes the video interpolation information of the video; and if it does not exist, select a third party from the cloud.

With reference to the sixth aspect or the first possible implementation manner of the sixth aspect, in a second possible implementation manner of the foregoing sixth aspect, the apparatus further includes:
a third sending module, configured to: if the third party does not obtain the video interpolation information of the video, send the video bitstream of the video to the third party, so that the third party acquires the video interpolation information of the video according to the video bitstream of the video and sends the video interpolation information of the video to the terminal.

According to a seventh aspect, a video quality enhancement apparatus is provided, where the apparatus includes a first memory and a first processor, configured to perform the video quality enhancement method according to any implementation manner included in the foregoing first aspect.

According to an eighth aspect, a video quality enhancement apparatus is provided, where the apparatus includes a second memory and a second processor, configured to perform the video quality enhancement method according to any implementation manner included in the foregoing second aspect.

According to a ninth aspect, a video quality enhancement apparatus is provided, where the apparatus includes a third memory and a third processor, configured to perform the video quality enhancement method according to any implementation manner included in the foregoing third aspect.

In the embodiments of the present invention, a third party acquires and sends video interpolation information of a video to a terminal, and the terminal performs a motion interpolation on the video according to the video interpolation information of the video to obtain a new video, so that video quality of the obtained new video is superior to video quality of the original video. Because the motion estimation is implemented on the third party, the terminal implements only a motion interpolation process, thereby reducing calculation complexity of a process in which the terminal performs video quality enhancement.

### BRIEF DESCRIPTION OF DRAWINGS

FIG. 1 is a flowchart of a video quality enhancement method according to Embodiment 1 of the present invention;
FIG. 2 is a flowchart of still another video quality enhancement method according to Embodiment 2 of the present invention;
FIG. 3 is a flowchart of still another video quality enhancement method according to Embodiment 3 of the present invention;
FIG. 4 is a flowchart of still another video quality enhancement method according to Embodiment 4 of the present invention;
FIG. 5 is a flowchart of still another video quality enhancement method according to Embodiment 5 of the present invention;
FIG. 6 is a flowchart of still another video quality enhancement method according to Embodiment 6 of the present invention;
FIG. 7 is a flowchart of still another video quality enhancement method according to Embodiment 7 of the present invention;
FIG. 8 is a schematic structural diagram of a video quality enhancement apparatus according to Embodiment 8 of the present invention;
FIG. 9 is a schematic structural diagram of a video quality enhancement apparatus according to Embodiment 9 of the present invention;
FIG. 10 is a schematic structural diagram of a video quality enhancement apparatus according to Embodiment 10 of the present invention;
FIG. 11 is a schematic structural diagram of a video quality enhancement apparatus according to Embodiment 11 of the present invention;
FIG. 12 is a schematic structural diagram of a video quality enhancement apparatus according to Embodiment 12 of the present invention; and
FIG. 13 is a schematic structural diagram of a video quality enhancement apparatus according to Embodiment 13 of the present invention.

### DESCRIPTION OF EMBODIMENTS

To make the objectives, technical solutions, and advantages of the present invention clearer, the following further describes the embodiments of the present invention in detail with reference to the accompanying drawings.

### Embodiment 1

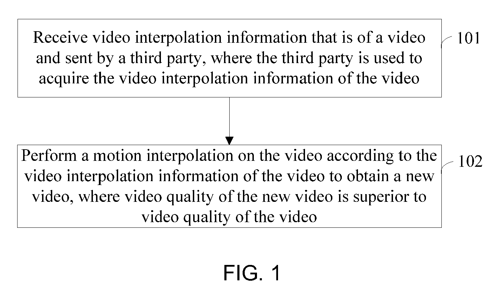

This embodiment of the present invention provides a video quality enhancement method. Referring to FIG. 1, the method includes:
Step 101: Receive video interpolation information that is of a video and sent by a third party, where the third party is used to acquire the video interpolation information of the video.
Step 102: Perform a motion interpolation on the video according to the video interpolation information of the video to obtain a new video, where video quality of the new video is superior to video quality of the video.

In this embodiment of the present invention, a terminal receives a video bitstream that is of a video and sent by a video stream server and video interpolation information that is of a video and sent by a third party, and performs a motion interpolation on the video according to the video interpolation information of the video to obtain a new video, where video quality of the obtained new video is superior to video quality of the original video. Because a motion estimation process is implemented on the third party, the terminal implements a motion interpolation, thereby reducing calculation complexity of a process in which the terminal performs video quality enhancement.

### Embodiment 2

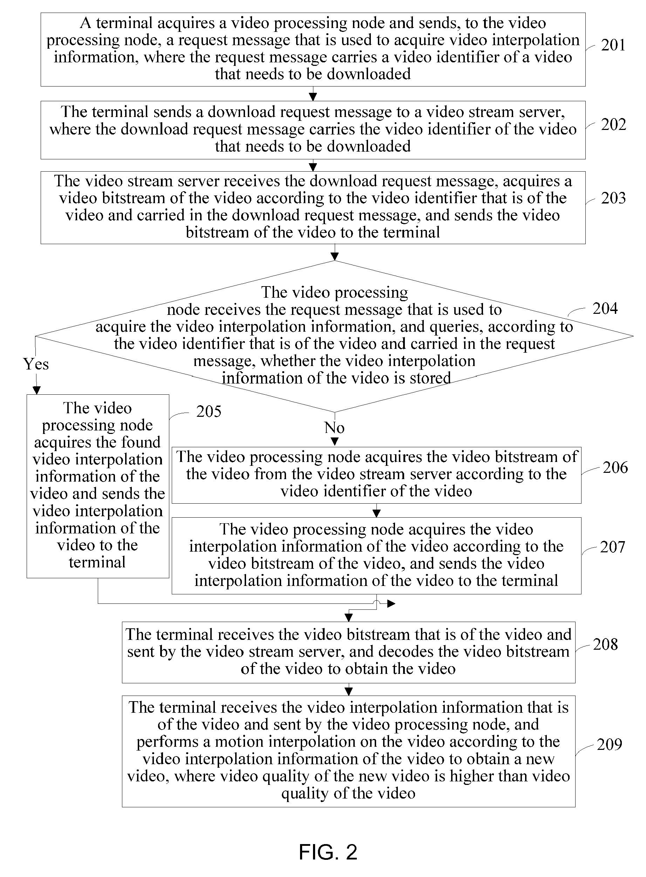

This embodiment of the present invention provides a video quality enhancement method. In this embodiment of the present invention, a terminal receives video interpolation information that is of a video and sent by a video processing node located on a cloud, and performs a motion interpolation on the video according to the video interpolation information of the video to obtain a new video. Referring to FIG. 2, the method includes:
Step 201: The terminal acquires the video processing node and sends, to the video processing node, a request message that is used to acquire video interpolation information, where the request message carries a video identifier of a video that needs to be downloaded.

Specifically, the terminal sends a node request message to a node selection server; the node selection server receives the node request message, selects a video processing node from a network topology that is stored on the node selection server, and notifies the terminal of the video processing node; and then the terminal sends, to the video processing node, the request message that is used to acquire the video interpolation information, where the request message carries the video identifier of the video that needs to be downloaded by the terminal. After receiving the node request message sent by the terminal, the node selection server may select a video processing node closest to the terminal or select a video processing node with a stronger processing capability, or the like from the network topology that is stored on the node selection server.

In addition to a manner in which the terminal sends the node request message to the node selection server to select the video processing node, the terminal may also acquire the video processing node from a known list that is stored on the terminal, where the known list stores an address of the video processing node; or the terminal may receive an address that is of the video processing node and entered by a user.

Step 202: The terminal sends a download request message to a video stream server, where the download request message carries the video identifier of the video that needs to be downloaded. Step 203: The video stream server receives the download request message, acquires a video bitstream of the video according to the video identifier that is of the video and carried in the download request message, and sends the video bitstream of the video to the terminal. Specifically, the video stream server receives the download request message, acquires the video bitstream of the video according to the video identifier that is of the video and carried in the download request message, and sends the video bitstream of the video to the terminal.

A video transmission path exists between the video stream server and the terminal, and the video stream server sends the video bitstream of the video to the terminal through the video transmission path to the terminal.

Step 204: The video processing node receives the request message that is used to acquire the video interpolation information, and queries, according to the video identifier that is of the video and carried in the request message, whether the video interpolation information of the video is stored, and if yes, performs step 205; if it does not exist, performs step 206.

Specifically, the video processing node receives the request message that is used to acquire the video interpolation information, and queries, according to the video identifier that is of the video and carried in the request message, whether the video interpolation information of the video exists in a stored correspondence between a video identifier and video interpolation information. The video interpolation information of the video includes a frame sequence number of a video frame included in the video, and a motion vector reference direction and a motion vector size of an interpolation block included in the video frame; further, in a case in which a reference frame of the video is a non-default reference frame, the video interpolation information of the video may further include a sequence number of the reference frame, and a weight of a bidirectional interpolation.

The correspondence between a video identifier and video interpolation information may also be stored in a storage node of the cloud; accordingly, the video processing node may query, by means of communication, the correspondence that is between a video identifier and video interpolation information and stored in the storage node, and acquire the stored video interpolation information of the video from the storage node of the cloud according to the video identifier of the video.

Step 205: The video processing node acquires the found video interpolation information of the video and sends the video interpolation information of the video to the terminal, and performs step 208.

The video processing node may compress the video interpolation information of the video, and then send the compressed video interpolation information of the video to the terminal, so that occupation of network bandwidth resources can be reduced.

Step 206: The video processing node acquires the video bitstream of the video from the video stream server according to the video identifier of the video.

Specifically, the video processing node sends the download request message to the video stream server, where the download request message carries the video identifier of the video; the video stream server receives the download request message, acquires the video bitstream of the video according to the video identifier of the video, and sends the video bitstream of the video to the video processing node; the video processing node receives the video bitstream of the video. A video transmission path exists between the video stream server and the video processing node, and the video stream server sends the video bitstream of the video to the video processing node through the video transmission path to the video processing node.

Step 207: The video processing node acquires the video interpolation information of the video according to the video bitstream of the video, and sends the video interpolation information of the video to the terminal.

Specifically, the video processing node decodes the video bitstream of the video to restore the video, performs a motion estimation on the video to obtain the video interpolation information of the video, and sends the video interpolation information of the video to the terminal.

The video processing node may compress the video interpolation information of the video, and then send the compressed video interpolation information of the video to the terminal, so that occupation of network bandwidth resources can be reduced.

A video transmission path and/or a transmission channel exist/exists between the video processing node and the terminal. The transmission channel may include a wireless network connection, an http (hypertext transport protocol, Hypertext Transport Protocol) connection, a p2p (Peer-to-Peer, point-to-point) connection, and/or an RTP (Real-time Transport Protocol, Real-Time Transport Protocol) connection, and/or the like between the video processing node and the terminal, and a wireless network may be a 3G (3rd-generation, 3rd generation mobile communications technology) network and/or an LTE (Long Term Evolution, Long Term Evolution) network, and/or the like.

Accordingly, the video processing node may send the video interpolation information of the video to the terminal through the video transmission path to the terminal. Alternatively, the video processing node may send the video interpolation information of the video to the terminal through the transmission channel to the terminal.

Further, the video processing node stores a correspondence between the video identifier of the video and the video interpolation information of the video.

In this embodiment of the present invention, the terminal may also not directly request the video processing node for acquiring the video interpolation information of the video. Instead, after receiving the download request message, the video stream server requests the video processing node to send the video interpolation information of the video to the terminal. This process may include the following steps (1)-(5):
(1): After receiving the download request message, the video stream server queries, according to the video identifier that is of the video and carried in the download request message, whether a video processing node that includes the video interpolation information of the video exists on the cloud, and if it exists, performs step (2); if it does not exist, performs step (4).

Specifically, the video stream server broadcasts a query request message to the video processing node of the cloud, where the query request message carries the video identifier of the video; the video processing node located on the cloud receives the query request message, and determines, according to the video identifier that is of the video and carried in the query request message, whether the video processing node includes the video interpolation information of the video, and if included, a query response message is sent to the video stream server, where the query response message carries identification information that is used to indicate that the video processing node includes the video interpolation information of the video, and if not included, a query response message is sent to the video stream server, where the query response message carries identification information that is used to indicate that the video processing node does not include the video interpolation information of the video; and the video stream server receives the query response message that is sent by the video processing node of the cloud, and determines, according to the identification information carried in the received query response message, whether the video processing node that includes the video interpolation information of the video exists on the cloud.

If the query response message received by the video stream server carries the identification information that is used to indicate that the video processing node includes the video interpolation information of the video, the video stream server determines that the video processing node that includes the video interpolation information of the video exists on the cloud; and if the query response message received by the video stream server does not carry the identification information that is used to indicate that the video processing node includes the video interpolation information of the video, the video stream server determines that the video processing node that includes the video interpolation information of the video does not exist on the cloud.

In this embodiment of the present invention, the video stream server may also query the video processing node on a server, where a correspondence between the address of the video processing node and the video identifier of the video is stored on the server, and the server stores the video identifier of the video and the address of the video processing node that stores the video interpolation information of the video in the correspondence between the address of the video processing node and the video identifier of the video; accordingly, the video stream server finds, from the server according to the video identifier of the video requested by the terminal, the video processing node that stores the video interpolation information of the video requested by the terminal.
(2): The video stream server selects a video processing node that includes the video interpolation information of the video and sends, to the selected video processing node, the request message that is used to acquire the video interpolation information, where the request message carries the video identifier of the video and an address of the terminal.

Specifically, if it is found that multiple video processing nodes that include the video interpolation information of the video exist, the video stream server selects one video processing node from the found multiple video processing nodes. If it is found that one video processing node that includes the video interpolation information of the video exists, the video stream server may directly select the found video processing node, and send, to the selected video processing node, the request message that is used to acquire the video interpolation information, where the request message carries the video identifier of the video and the address of the terminal.

That the video stream server selects one video processing node from the found multiple video processing nodes may be as follows:
The video stream server may select one video processing node closest to the terminal from the found multiple video processing nodes, may select one video processing node with a stronger processing capability from the found multiple video processing nodes, or may randomly select one video processing node from the found multiple video processing nodes.
   (3): The video processing node receives the video identifier of the video and the address of the terminal, acquires the video interpolation information of the video according to the video identifier of the video, and sends the video interpolation information of the video to the terminal according to the address of the terminal and the operation ends.
   (4): The video stream server selects a video processing node from the cloud for the terminal, and sends the video bitstream of the video and the address of the terminal to the video processing node.
   (5): The video processing node receives the video bitstream of the video and the address of the terminal, acquires the video interpolation information of the video according to the video bitstream of the video, and sends the video interpolation information of the video to the terminal according to the address of the terminal and the operation ends.

After acquiring the video interpolation information of the video, the video processing node stores the correspondence between the video identifier and the video interpolation information of the video.

Another preferred implementation manner of this embodiment of the present invention is as follows: A request message that is used to acquire video interpolation information and sent by a video stream server to a video processing node may not carry an address of the terminal, and the video processing node acquires the video interpolation information of the video according to the video identifier of the video and sends the video interpolation information of the video to the video stream server, so that the video stream server sends a video bitstream of the video and the video interpolation information to the terminal together.

Another preferred implementation manner of this embodiment of the present invention is as follows: The terminal sends, to the video processing node, a request message that is used to acquire interpolation information, where the request message carries a video identifier of a video that needs to be downloaded and an address of the terminal; the video processing node receives the request message, acquires the video interpolation information of the video according to the video identifier carried in the request message, sends the video interpolation information of the video to the terminal according to the address that is of the terminal and carried in the request message, and sends a download request message to a video stream server, where the download request message carries the video identifier of the video and the address of the terminal; and the video stream server receives the download request message, acquires a video bitstream of the video according to the video identifier carried in the download request message, and sends the video bitstream of the video to the terminal according to the address that is of the terminal and carried in the download request message.

Another preferred implementation manner of this embodiment of the present invention is as follows: The terminal sends, to the video processing node, a request message that is used to acquire interpolation information, where the request message carries a video identifier of the video; the video processing node receives the request message and sends a download request message to a video stream server, where the download request message carries the video identifier of the video; the video stream server receives the download request message, acquires a video bitstream of the video according to the video identifier that is of the video and carried in the download request message, and sends the video bitstream of the video to the video processing node; and the video processing node acquires the video interpolation information of the video and receives the video bitstream of the video according to the video identifier of the video, and sends the video interpolation information of the video and the video bitstream of the video to the terminal.

Another preferred implementation manner of this embodiment of the present invention is as follows: The terminal sends a download request message to a video stream server, where the download request message carries a video identifier of the video, an address of the terminal, and an address of the video processing node; the video stream server receives the download request message, and sends a video bitstream of the video to the terminal and sends the video bitstream of the video and the address of the terminal to the video processing node according to the address of the video processing node and the address of the terminal that are carried in the download request message; and after receiving the video bitstream, the video processing node acquires the video interpolation information of the video according to the video bitstream of the video, and sends the video interpolation information of the video to the terminal according to the address of the terminal.

Another preferred implementation manner of this embodiment of the present invention is as follows: The terminal sends a download request message to a video stream server, where the download request message carries a video identifier of the video and an identifier that is used to acquire the video interpolation information; and the video stream server receives the download request message, acquires a video bitstream of the video according to the video identifier of the video, acquires the video interpolation information of the video according to the video identifier of the video and according to an indication of the identifier that is used to acquire the video interpolation information, and sends the video bitstream and video interpolation information of the video to the terminal. The video stream server may query a stored correspondence between a video identifier and video interpolation information according to the video identifier of the video, and if the video interpolation information of the video is found, the video interpolation information of the video is acquired; if the video interpolation information of the video is not found, a motion estimation is performed on the video to obtain the video interpolation information of the video and a correspondence between the video identifier of the video and the video interpolation information of the video is stored.

In this embodiment of the present invention, in addition to a download manner, a watching manner such as broadcast on demand, live broadcast, and watching-while-download of a general streaming media video may also be included.

Step 208: The terminal receives the video bitstream that is of the video and sent by the video stream server, and decodes the video bitstream of the video to obtain the video.

The terminal may receive, through the video transmission path to the video stream server, the video bitstream that is of the video and sent by the video stream server.

Step 209: The terminal receives the video interpolation information that is of the video and sent by the video processing node, and performs a motion interpolation on the video according to the video interpolation information of the video to obtain the new video, where video quality of the new video is superior to video quality of the video.

The terminal may receive, through the video transmission path to the video processing node, the video interpolation information that is of the video and sent by the video processing node. Alternatively, the terminal may receive, through the transmission channel to the video processing node, the video interpolation information that is of the video and sent by the video processing node.

After performing a motion interpolation on the video according to the video interpolation information of the video, the terminal obtains the new video, and a frame rate of the new video is greater than a frame rate of the video and/or an image resolution of the new video is greater than an image resolution of the video, so that the video quality of the new video is superior to the video quality of the video.

The video interpolation information that is of the video and received by the terminal includes video interpolation information of a video frame included in the video, and therefore, by performing a motion interpolation on the video according to the video interpolation information of the video frame included in the video, a damaged video frame in the video can be recovered and/or an image resolution and a frame rate of the video frame included in the video can be amplified. Further, the terminal may also generate video interpolation information of a lost video frame of the video according to the video interpolation information of the video, and perform a motion interpolation on the video according to the video interpolation information of the lost video frame of the video to obtain a new video, where the new video includes the lost video frame of the video, and the frame rate of the new video is greater than the frame rate of the video. Therefore, the frame rate of the new video obtained after the motion interpolation is greater than the frame rate of the video and/or the image resolution of the new video is greater than the image resolution of the video, so that the video quality of the new video is superior to the video quality of the video.

Further, if the terminal receives the video interpolation information of the video after the video is played, the terminal selects video interpolation information of a video frame included in a non-played video according to the non-played video, and performs a motion interpolation on the non-played video according to the video interpolation information of the video frame included in the non-played video.

Further, if video interpolation information of some video frames included in the video is damaged, the terminal selects video interpolation information of a non-damaged video frame, and performs a motion interpolation on the video according to the selected video interpolation information of the non-damaged video frame.

Further, if a video frame of the video is damaged, the terminal performs a motion interpolation on the video according to the video interpolation information of the video, so that the damaged video frame in the video can be recovered.

Further, in this embodiment of the present invention, the terminal may also save a video in advance, that is, the terminal does not need to download the video from the video stream server; the terminal may send, to the video processing node, the request message that is used to acquire the interpolation information, where the request message carries a video identifier of the video; the video processing node receives the request message, acquires video interpolation information of the video according to the video identifier that is of the video and carried in the request message, and sends the video interpolation information of the video to the terminal; and the terminal receives the video interpolation information of the video, and performs a motion interpolation on the stored video according to the video interpolation information of the video to obtain a new video.

In this embodiment of the present invention, a video processing node located on a cloud acquires and sends video interpolation information of a video to a terminal, and the terminal performs a motion interpolation on the video according to the video interpolation information of the video to obtain a new video, so that video quality of the obtained new video is superior to video quality of the original video. Because a motion estimation process is implemented on the video processing node, the terminal implements only a motion interpolation process, thereby reducing calculation complexity of a process in which the terminal performs video quality enhancement.

### Embodiment 3

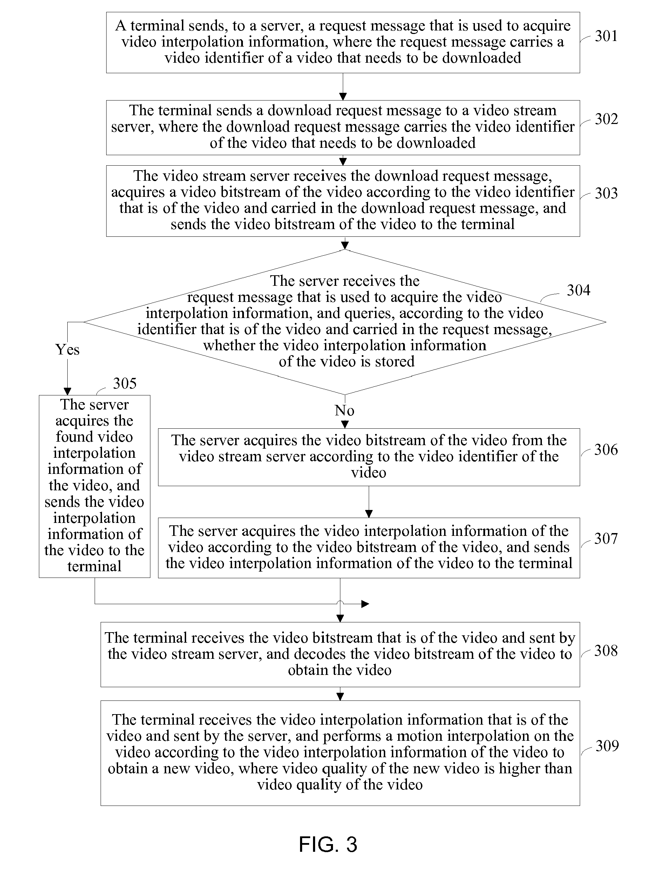

This embodiment of the present invention provides a video quality enhancement method. In this embodiment of the present invention, a server is arranged on a network in advance, the server acquires video interpolation information of a video and sends the video interpolation information of the video to a terminal, and the terminal performs a motion interpolation on the video according to the video interpolation information of the video to obtain a new video. Referring to FIG. 3, the method includes:
Step 301: The terminal sends, to the server, a request message that is used to acquire video interpolation information, where the request message carries a video identifier of a video that needs to be downloaded.
Step 302: The terminal sends a download request message to a video stream server, where the download request message carries the video identifier of the video that needs to be downloaded. Step 303: The video stream server receives the download request message, acquires a video bitstream of the video according to the video identifier that is of the video and carried in the download request message, and sends the video bitstream of the video to the terminal. Specifically, the video stream server receives the download request message, acquires the video bitstream of the video according to the video identifier that is of the video and carried in the download request message, and sends the video bitstream of the video to the terminal.

A video transmission path exists between the video stream server and the terminal, and the video stream server sends the video bitstream of the video to the terminal through the video transmission path to the terminal.

Step 304: The server receives the request message that is used to acquire the video interpolation information, and queries, according to the video identifier that is of the video and carried in the request message, whether the video interpolation information of the video is stored, and if yes, performs step 305; if it does not exist, performs step 306.

Specifically, the server receives the request message that is used to acquire the video interpolation information, and queries, according to the video identifier that is of the video and carried in the request message, whether the video interpolation information of the video exists in a stored correspondence between a video identifier and video interpolation information.

The video interpolation information of the video includes a frame sequence number of a video frame included in the video, and a motion vector reference direction and a motion vector size of an interpolation block included in the video frame; further, in a case in which a reference frame of the video is a non-default reference frame, the video interpolation information of the video may further include a sequence number of the reference frame, and a weight of a bidirectional interpolation.

Step 305: The server acquires the found video interpolation information of the video, and sends the video interpolation information of the video to the terminal, and step 308 is performed.

The server may compress the video interpolation information of the video, and then send the compressed video interpolation information of the video to the terminal, so that occupation of network bandwidth resources can be reduced.

Step 306: The server acquires the video bitstream of the video from the video stream server according to the video identifier of the video.

Specifically, the server sends the download request message to the video stream server, where the download request message carries the video identifier of the video; the video stream server receives the download request message, acquires the video bitstream of the video according to the video identifier of the video, and sends the video bitstream of the video to the server; and the server receives the video bitstream of the video.

A video transmission path exists between the video stream server and the server, and the video stream server sends the video bitstream of the video to the server through the video transmission path to the server.

Step 307: The server acquires the video interpolation information of the video according to the video bitstream of the video, and sends the video interpolation information of the video to the terminal.

Specifically, the server decodes the video bitstream of the video to restore the video, performs a motion estimation on the video to obtain the video interpolation information of the video, and sends the video interpolation information of the video to the terminal.

The server may compress the video interpolation information of the video, and then send the compressed video interpolation information of the video to the terminal, so that occupation of network bandwidth resources can be reduced.

A video transmission path and/or a transmission channel exist/exists between the server and the terminal. The transmission channel may include a wireless network connection, an http connection, a p2p connection and/or an RTP connection, and/or the like between the server and the terminal, and a wireless network may be a 3G network and/or an LTE network, and/or the like.

Accordingly, the server may send the video interpolation information of the video to the terminal through the video transmission path to the terminal. Alternatively, the server may send the video interpolation information of the video to the terminal through the transmission channel to the terminal.

Further, the server stores a correspondence between the video identifier of the video and the video interpolation information of the video.

Another preferred implementation manner of this embodiment of the present invention is as follows: The terminal sends, to the server, a request message that is used to acquire interpolation information, where the request message carries a video identifier of a video that needs to be downloaded and an address of the terminal; the server receives the request message, acquires the video interpolation information of the video according to the video identifier carried in the request message, sends the video interpolation information of the video to the terminal according to the address that is of the terminal and carried in the request message, and sends a download request message to a video stream server, where the download request message carries the video identifier of the video and the address of the terminal; and the video stream server receives the download request message, acquires a video bitstream of the video according to the video identifier carried in the download request message, and sends the video bitstream of the video to the terminal according to the address that is of the terminal and carried in the download request message.

Another preferred implementation manner of this embodiment of the present invention is as follows: The terminal sends, to the server, a request message that is used to acquire interpolation information, where the request message carries a video identifier of the video; the server receives the request message and sends a download request message to a video stream server, where the download request message carries the video identifier of the video; the video stream server receives the download request message, acquires a video bitstream of the video according to the video identifier that is of the video and carried in the download request message, and sends the video bitstream of the video to the server; and the server acquires the video interpolation information of the video and receives the video bitstream of the video according to the video identifier of the video, and sends the video interpolation information of the video and the video bitstream of the video to the terminal.

Another preferred implementation manner of this embodiment of the present invention is as follows: The terminal sends a download request message to a video stream server, where the download request message carries a video identifier of the video, an address of the terminal, and an address of the server; the video stream server receives the download request message, and sends a video bitstream of the video to the terminal and sends the video bitstream of the video and the address of the terminal to the server according to the address of the server and the address of the terminal that are carried in the download request message; and after receiving the video bitstream, the server acquires the video interpolation information of the video according to the video bitstream of the video, and sends the video interpolation information of the video to the terminal according to the address of the terminal.

Another preferred implementation manner of this embodiment of the present invention is as follows: The terminal sends a download request message to a video stream server, where the download request message carries a video identifier of the video and an identifier that is used to acquire the video interpolation information; and the video stream server receives the download request message, acquires a video bitstream of the video according to the video identifier of the video, acquires the video interpolation information of the video according to the video identifier of the video and according to an indication of the identifier that is used to acquire the video interpolation information, and sends the video bitstream and video interpolation information of the video to the terminal. The video stream server may query a stored correspondence between a video identifier and video interpolation information according to the video identifier of the video, and if the video interpolation information of the video is found, the video interpolation information of the video is acquired; if the video interpolation information of the video is not found, a motion estimation is performed on the video to obtain the video interpolation information of the video and a correspondence between the video identifier of the video and the video interpolation information of the video is stored.

In this embodiment of the present invention, in addition to a download manner, a watching manner such as broadcast on demand, live broadcast, and watching-while-download of a general streaming media video may also be included.

Step 308: The terminal receives the video bitstream that is of the video and sent by the video stream server, and decodes the video bitstream of the video to obtain the video.

The terminal may receive, through the video transmission path to the video stream server, the video bitstream that is of the video and sent by the video stream server.

Step 309: The terminal receives the video interpolation information that is of the video and sent by the server, and performs a motion interpolation on the video according to the video interpolation information of the video to obtain the new video, where video quality of the new video is superior to video quality of the video.

The terminal may receive, through the video transmission path to the server, the video interpolation information that is of the video and sent by the server. Alternatively, the terminal may receive, through the transmission channel to the server, the video interpolation information that is of the video and sent by the server.

After performing a motion interpolation on the video according to the video interpolation information of the video, the terminal obtains the new video, and a frame rate of the new video is greater than a frame rate of the video and/or an image resolution of the new video is greater than an image resolution of the video, so that the video quality of the new video is superior to the video quality of the video.

The video interpolation information that is of the video and received by the terminal includes video interpolation information of a video frame included in the video, and therefore, by performing a motion interpolation on the video according to the video interpolation information of the video frame included in the video, a damaged video frame in the video can be recovered and/or an image resolution and a frame rate of the video frame included in the video can be amplified. Further, the terminal may also generate video interpolation information of a lost video frame of the video according to the video interpolation information of the video, and perform a motion interpolation on the video according to the video interpolation information of the lost video frame of the video to obtain a new video, where the new video includes the lost video frame of the video, and the frame rate of the new video is greater than the frame rate of the video. Therefore, the frame rate of the new video obtained after the motion interpolation is greater than the frame rate of the video and/or the image resolution of the new video is greater than the image resolution of the video, so that the video quality of the new video is superior to the video quality of the video.

Further, if the terminal receives the video interpolation information of the video after the video is played, the terminal selects video interpolation information of a video frame included in a non-played video according to the non-played video, and performs a motion interpolation on the non-played video according to the video interpolation information of the video frame included in the non-played video.

Further, if video interpolation information of some video frames included in the video is damaged, the terminal selects video interpolation information of a non-damaged video frame, and performs a motion interpolation on the video according to the selected video interpolation information of the non-damaged video frame.

Further, if a video frame of the video is damaged, the terminal performs a motion interpolation on the video according to the video interpolation information of the video, so that the damaged video frame in the video can be recovered.

Further, in this embodiment of the present invention, the terminal may also save a video in advance, that is, the terminal does not need to download the video from the video stream server; the terminal may send, to the server, the request message that is used to acquire the interpolation information, where the request message carries a video identifier of the video; the server receives the request message, acquires video interpolation information of the video according to the video identifier that is of the video and carried in the request message and sends the video interpolation information of the video to the terminal; and the terminal receives the video interpolation information of the video, and performs a motion interpolation on the stored video according to the video interpolation information of the video to obtain a new video.

In this embodiment of the present invention, a server acquires and sends video interpolation information of a video to a terminal, and the terminal performs a motion interpolation on the video according to the video interpolation information of the video to obtain a new video, so that video quality of the obtained new video is superior to video quality of the original video. Because a motion estimation process is implemented on the server, the terminal implements only a motion interpolation process, thereby reducing calculation complexity of a process in which the terminal performs video quality enhancement.

### Embodiment 4

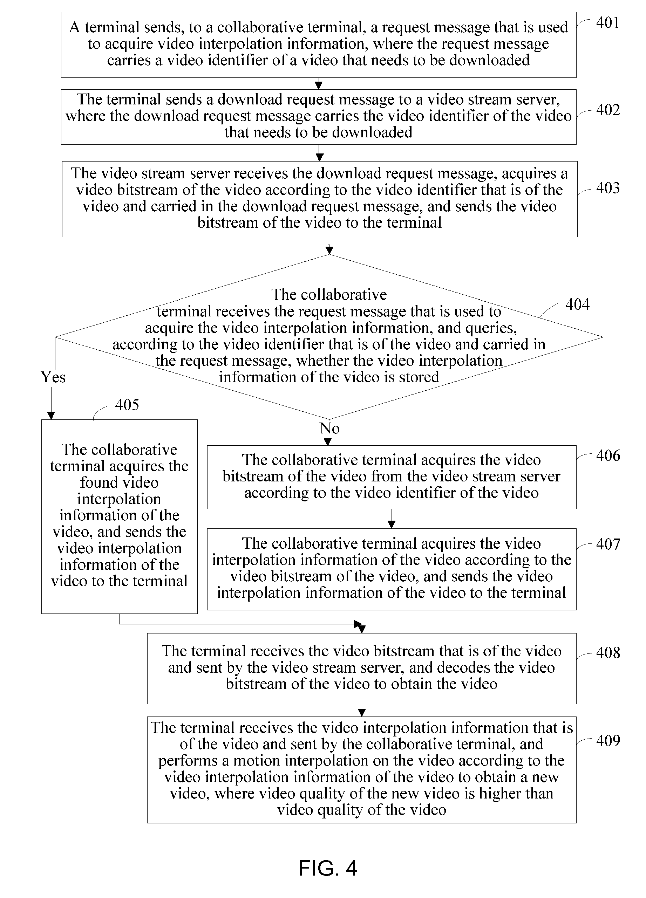

This embodiment of the present invention provides a video quality enhancement method. In this embodiment of the present invention, a collaborative terminal with a stronger processing capability is arranged in advance, the collaborative terminal acquires video interpolation information of a video and sends the video interpolation information of the video to a terminal, and the terminal performs a motion interpolation on the video according to the video interpolation information of the video to obtain a new video. Referring to FIG. 4, the method includes:
Step 401: The terminal sends, to the collaborative terminal, a request message that is used to acquire video interpolation information, where the request message carries a video identifier of a video that needs to be downloaded.
Step 402: The terminal sends a download request message to a video stream server, where the download request message carries the video identifier of the video that needs to be downloaded. Step 403: The video stream server receives the download request message, acquires a video bitstream of the video according to the video identifier that is of the video and carried in the download request message, and sends the video bitstream of the video to the terminal. Specifically, the video stream server receives the download request message, acquires the video bitstream of the video according to the video identifier that is of the video and carried in the download request message, and sends the video bitstream of the video to the terminal.

A video transmission path exists between the video stream server and the terminal, and the video stream server sends the video bitstream of the video to the terminal through the video transmission path to the terminal.

Step 404: The collaborative terminal receives the request message that is used to acquire the video interpolation information, and queries, according to the video identifier that is of the video and carried in the request message, whether the video interpolation information of the video is stored, and if yes, performs step 405; if it does not exist, performs step 406.

Specifically, the collaborative terminal receives the request message that is used to acquire the video interpolation information, and queries, according to the video identifier that is of the video and carried in the request message, whether the video interpolation information of the video exists in a stored correspondence between a video identifier and video interpolation information. The video interpolation information of the video includes a frame sequence number of a video frame included in the video, and a motion vector reference direction and a motion vector size of an interpolation block included in the video frame; further, in a case in which a reference frame of the video is a non-default reference frame, the video interpolation information of the video may further include a sequence number of the reference frame, and a weight of a bidirectional interpolation.

Step 405: The collaborative terminal acquires the found video interpolation information of the video, and sends the video interpolation information of the video to the terminal, and step 408 is performed.

The collaborative terminal may compress the video interpolation information of the video, and then send the compressed video interpolation information of the video to the terminal, so that occupation of network bandwidth resources can be reduced.

Step 406: The collaborative terminal acquires the video bitstream of the video from the video stream server according to the video identifier of the video.

Specifically, the collaborative terminal sends the download request message to the video stream server, where the download request message carries the video identifier of the video; the video stream server receives the download request message, acquires the video bitstream of the video according to the video identifier of the video, and sends the video bitstream of the video to the collaborative terminal; and the collaborative terminal receives the video bitstream of the video. A video transmission path exists between the video stream server and the collaborative terminal, and the video stream server sends the video bitstream of the video to the collaborative terminal through the video transmission path to the collaborative terminal.

Step 407: The collaborative terminal acquires the video interpolation information of the video according to the video bitstream of the video, and sends the video interpolation information of the video to the terminal.

Specifically, the collaborative terminal decodes the video bitstream of the video to restore the video, performs a motion estimation on the video to obtain the video interpolation information of the video, and sends the video interpolation information of the video to the terminal.

The collaborative terminal may compress the video interpolation information of the video, and then send the compressed video interpolation information of the video to the terminal, so that occupation of network bandwidth resources can be reduced.

A video transmission path and/or a transmission channel exist/exists between the collaborative terminal and the terminal. The transmission channel may include a wifi connection, a Bluetooth connection, a wireless network connection, an http connection, a p2p connection, and/or an RTP connection, and/or the like between the collaborative terminal and the terminal, and a wireless network may be a 3G network and/or an LTE network, and/or the like.

Accordingly, the collaborative terminal may send the video interpolation information of the video to the terminal through the video transmission path to the terminal. Alternatively, the collaborative terminal may send the video interpolation information of the video to the terminal through the transmission channel to the terminal.

Further, the collaborative terminal stores a correspondence between the video identifier of the video and the video interpolation information of the video.

Another preferred implementation manner of this embodiment of the present invention is as follows: The terminal sends, to the collaborative terminal, a request message that is used to acquire interpolation information, where the request message carries a video identifier of a video that needs to be downloaded and an address of the terminal; the collaborative terminal receives the request message, acquires the video interpolation information of the video according to the video identifier carried in the request message, sends the video interpolation information of the video to the terminal according to the address that is of the terminal and carried in the request message, and sends a download request message to a video stream server, where the download request message carries the video identifier of the video and the address of the terminal; and the video stream server receives the download request message, acquires a video bitstream of the video according to the video identifier carried in the download request message, and sends the video bitstream of the video to the terminal according to the address that is of the terminal and carried in the download request message.

Another preferred implementation manner of this embodiment of the present invention is as follows: The terminal sends, to the collaborative terminal, a request message that is used to acquire interpolation information, where the request message carries a video identifier of the video; the collaborative terminal receives the request message and sends a download request message to a video stream server, where the download request message carries the video identifier of the video; the video stream server receives the download request message, acquires a video bitstream of the video according to the video identifier that is of the video and carried in the download request message, and sends the video bitstream of the video to the collaborative terminal; and the collaborative terminal acquires the video interpolation information of the video and receives the video bitstream of the video according to the video identifier of the video, and sends the video interpolation information of the video and the video bitstream of the video to the terminal.

Another preferred implementation manner of this embodiment of the present invention is as follows: The terminal sends a download request message to a video stream server, where the download request message carries a video identifier of the video, an address of the terminal, and an address of the collaborative terminal; the video stream server receives the download request message, and sends a video bitstream of the video to the terminal and sends the video bitstream of the video and the address of the terminal to the collaborative terminal according to the address of the collaborative terminal and the address of the terminal that are carried in the download request message; and after receiving the video bitstream, the collaborative terminal acquires the video interpolation information of the video according to the video bitstream of the video, and sends the video interpolation information of the video to the terminal according to the address of the terminal.

Another preferred implementation manner of this embodiment of the present invention is as follows: The terminal sends a download request message to a video stream server, where the download request message carries a video identifier of the video and an identifier that is used to acquire the video interpolation information; and the video stream server receives the download request message, acquires a video bitstream of the video according to the video identifier of the video, acquires the video interpolation information of the video according to the video identifier of the video and according to an indication of the identifier that is used to acquire the video interpolation information, and sends the video bitstream and video interpolation information of the video to the terminal. The video stream server may query a stored correspondence between a video identifier and video interpolation information according to the video identifier of the video, and if the video interpolation information of the video is found, the video interpolation information of the video is acquired; if the video interpolation information of the video is not found, a motion estimation is performed on the video to obtain the video interpolation information of the video and a correspondence between the video identifier of the video and the video interpolation information of the video is stored.

In this embodiment of the present invention, in addition to a download manner, a watching manner such as broadcast on demand, live broadcast, and watching-while-download of a general streaming media video may also be included.

Step 408: The terminal receives the video bitstream that is of the video and sent by the video stream server, and decodes the video bitstream of the video to obtain the video.

The terminal may receive, through the video transmission path to the video stream server, the video bitstream that is of the video and sent by the video stream server.

Step 409: The terminal receives the video interpolation information that is of the video and sent by the collaborative terminal, and performs a motion interpolation on the video according to the video interpolation information of the video to obtain the new video, where video quality of the new video is superior to video quality of the video.

The terminal may receive, through the video transmission path to the collaborative terminal, the video interpolation information that is of the video and sent by the collaborative terminal. Alternatively, the terminal may receive, through the transmission channel to the collaborative terminal, the video interpolation information that is of the video and sent by the collaborative terminal.

After performing a motion interpolation on the video according to the video interpolation information of the video, the terminal obtains the new video, and a frame rate of the new video is greater than a frame rate of the video and/or an image resolution of the new video is greater than an image resolution of the video, so that the video quality of the new video is superior to the video quality of the video.

The video interpolation information that is of the video and received by the terminal includes video interpolation information of a video frame included in the video, and therefore, by performing a motion interpolation on the video according to the video interpolation information of the video frame included in the video, a damaged video frame in the video can be recovered and/or an image resolution and a frame rate of the video frame included in the video can be amplified. Further, the terminal may also generate video interpolation information of a lost video frame of the video according to the video interpolation information of the video, and perform a motion interpolation on the video according to the video interpolation information of the lost video frame of the video to obtain a new video, where the new video includes the lost video frame of the video, and the frame rate of the new video is greater than the frame rate of the video. Therefore, the frame rate of the new video obtained after the motion interpolation is greater than the frame rate of the video and/or the image resolution of the new video is greater than the image resolution of the video, so that the video quality of the new video is superior to the video quality of the video.

Further, if the terminal receives the video interpolation information of the video after the video is played, the terminal selects video interpolation information of a video frame included in a non-played video according to the non-played video, and performs a motion interpolation on the non-played video according to the video interpolation information of the video frame included in the non-played video.

Further, if video interpolation information of some video frames included in the video is damaged, the terminal selects video interpolation information of a non-damaged video frame, and performs a motion interpolation on the video according to the selected video interpolation information of the non-damaged video frame.

Further, if a video frame of the video is damaged, the terminal performs a motion interpolation on the video according to the video interpolation information of the video, so that the damaged video frame in the video can be recovered.

Further, in this embodiment of the present invention, the terminal may also save a video in advance, that is, the terminal does not need to download the video from the video stream server; the terminal may send, to the collaborative terminal, the request message that is used to acquire the interpolation information, where the request message carries a video identifier of the video; the collaborative terminal receives the request message, acquires video interpolation information of the video according to the video identifier that is of the video and carried in the request message, and sends the video interpolation information of the video to the terminal; and the terminal receives the video interpolation information of the video, and performs a motion interpolation on the stored video according to the video interpolation information of the video to obtain a new video.

In this embodiment of the present invention, a collaborative terminal acquires and sends video interpolation information of a video to a terminal, and the terminal performs a motion interpolation on the video according to the video interpolation information of the video to obtain a new video, so that video quality of the obtained new video is superior to video quality of the original video. Because a motion estimation process is implemented on the collaborative terminal, the terminal implements only a motion interpolation process, thereby reducing calculation complexity of a process in which the terminal performs video quality enhancement.

### Embodiment 5

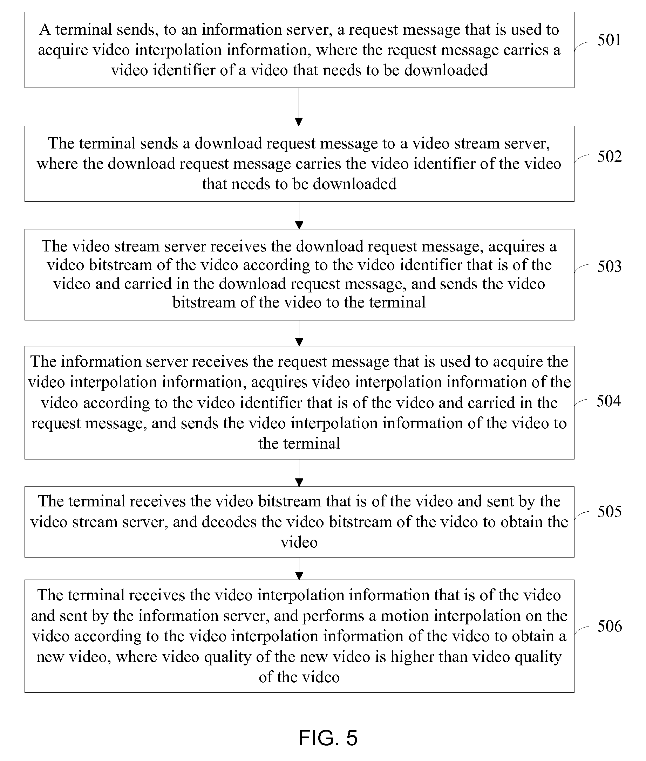

This embodiment of the present invention provides a video quality enhancement method. In this embodiment of the present invention, an information server that is used to store video interpolation information is arranged in advance, where the information server includes video interpolation information of all videos; and a terminal acquires, from the information server, video interpolation information of a video that needs to be downloaded, and performs a motion interpolation on the video according to the video interpolation information of the video to obtain a new video. Referring to FIG. 5, the method includes:
Step 501: The terminal sends, to the information server, a request message that is used to acquire video interpolation information, where the request message carries a video identifier of the video that needs to be downloaded.
Step 502: The terminal sends a download request message to a video stream server, where the download request message carries the video identifier of the video that needs to be downloaded.
Step 503: The video stream server receives the download request message, acquires a video bitstream of the video according to the video identifier that is of the video and carried in the download request message, and sends the video bitstream of the video to the terminal. Specifically, the video stream server receives the download request message, acquires the video bitstream of the video according to the video identifier that is of the video and carried in the download request message, and sends the video bitstream of the video to the terminal.

A video transmission path exists between the video stream server and the terminal, and the video stream server sends the video bitstream of the video to the terminal through the video transmission path to the terminal.

Step 504: The information server receives the request message that is used to acquire the video interpolation information, acquires video interpolation information of the video according to the video identifier that is of the video and carried in the request message, and sends the video interpolation information of the video to the terminal.

Specifically, the information server receives the request message that is used to acquire the video interpolation information, acquires, according to the video identifier that is of the video and carried in the request message, the video interpolation information of the video from a stored correspondence between a video identifier and video interpolation information, and sends the video interpolation information of the video to the terminal.

The video interpolation information of the video includes a frame sequence number of a video frame included in the video, and a motion vector reference direction and a motion vector size of an interpolation block included in the video frame; further, in a case in which a reference frame of the video is a non-default reference frame, the video interpolation information of the video may further include a sequence number of the reference frame, and a weight of a bidirectional interpolation.

The information server may compress the video interpolation information of the video, and then send the compressed video interpolation information of the video to the terminal, so that occupation of network bandwidth resources can be reduced.

A video transmission path and/or a transmission channel exist/exists between the information server and the terminal. The transmission channel may include a wireless network connection, an http connection, a p2p connection and/or an RTP connection, and/or the like between the information server and the terminal, and a wireless network may be a 3G network and/or an LTE network, and/or the like.

Accordingly, the information server may send the video interpolation information of the video to the terminal through the video transmission path to the terminal. Alternatively, the information server may send the video interpolation information of the video to the terminal through the transmission channel to the terminal.

When publishing a video, an operator first sends the video to the information server, and the information server performs a motion estimation on the video to obtain video interpolation information of the video, and stores a video identifier of the video and the video interpolation information in a correspondence between the video identifier and the video interpolation information.

Another preferred implementation manner of this embodiment of the present invention is as follows: The terminal sends, to the information server, a request message that is used to acquire interpolation information, where the request message carries a video identifier of a video that needs to be downloaded and an address of the terminal; the information server receives the request message, acquires the video interpolation information of the video according to the video identifier carried in the request message, sends the video interpolation information of the video to the terminal according to the address that is of the terminal and carried in the request message, and sends a download request message to a video stream server, where the download request message carries the video identifier of the video and the address of the terminal; and the video stream server receives the download request message, acquires a video bitstream of the video according to the video identifier carried in the download request message, and sends the video bitstream of the video to the terminal according to the address that is of the terminal and carried in the download request message.

Another preferred implementation manner of this embodiment of the present invention is as follows: The terminal sends, to the information server, a request message that is used to acquire interpolation information, where the request message carries a video identifier of the video; the information server receives the request message and sends a download request message to a video stream server, where the download request message carries the video identifier of the video; the video stream server receives the download request message, acquires a video bitstream of the video according to the video identifier that is of the video and carried in the download request message, and sends the video bitstream of the video to the information server; and the information server acquires the video interpolation information of the video and receives the video bitstream of the video according to the video identifier of the video, and sends the video interpolation information of the video and the video bitstream of the video to the terminal. Another preferred implementation manner of this embodiment of the present invention is as follows: The terminal sends a download request message to a video stream server, where the download request message carries a video identifier of the video, an address of the terminal, and an address of the information server; the video stream server receives the download request message, and sends a video bitstream of the video to the terminal and sends the video bitstream of the video and the address of the terminal to the information server according to the address of the information server and the address of the terminal that are carried in the download request message; and after receiving the video bitstream of the video, the information server acquires the video interpolation information of the video according to the video bitstream, and sends the video interpolation information of the video to the terminal according to the address of the terminal.

Another preferred implementation manner of this embodiment of the present invention is as follows: The terminal sends a download request message to a video stream server, where the download request message carries a video identifier of the video and an identifier that is used to acquire the video interpolation information; and the video stream server receives the download request message, acquires a video bitstream of the video according to the video identifier of the video, acquires the video interpolation information of the video according to the video identifier of the video and according to an indication of the identifier that is used to acquire the video interpolation information, and sends the video bitstream and video interpolation information of the video to the terminal. The video stream server may query a stored correspondence between a video identifier and video interpolation information according to the video identifier of the video, and if the video interpolation information of the video is found, the video interpolation information of the video is acquired; if the video interpolation information of the video is not found, a motion estimation is performed on the video to obtain the video interpolation information of the video and a correspondence between the video identifier of the video and the video interpolation information of the video is stored.

In this embodiment of the present invention, in addition to a download manner, a watching manner such as broadcast on demand, live broadcast, and watching-while-download of a general streaming media video may also be included.

Step 505: The terminal receives the video bitstream that is of the video and sent by the video stream server, and decodes the video bitstream of the video to obtain the video.

The terminal may receive, through the video transmission path to the video stream server, the video bitstream that is of the video and sent by the video stream server.

Step 506: The terminal receives the video interpolation information that is of the video and sent by the information server, and performs a motion interpolation on the video according to the video interpolation information of the video to obtain the new video, where video quality of the new video is greater than video quality of the video.

The terminal may receive, through the video transmission path to the information server, the video interpolation information that is of the video and sent by the information server. Alternatively, the terminal may receive, through the transmission channel to the information server, the video interpolation information that is of the video and sent by the information server. After performing a motion interpolation on the video according to the video interpolation information of the video, the terminal obtains the new video, and a frame rate of the new video is greater than a frame rate of the video and/or an image resolution of the new video is greater than an image resolution of the video, so that the video quality of the new video is superior to the video quality of the video.

The video interpolation information that is of the video and received by the terminal includes video interpolation information of a video frame included in the video, and therefore, by performing a motion interpolation on the video according to the video interpolation information of the video frame included in the video, a damaged video frame in the video can be recovered and/or an image resolution and a frame rate of the video frame included in the video can be amplified. Further, the terminal may also generate video interpolation information of a lost video frame of the video according to the video interpolation information of the video, and perform a motion interpolation on the video according to the video interpolation information of the lost video frame of the video to obtain a new video, where the new video includes the lost video frame of the video, and the frame rate of the new video is greater than the frame rate of the video. Therefore, the frame rate of the new video obtained after the motion interpolation is greater than the frame rate of the video and/or the image resolution of the new video is greater than the image resolution of the video, so that the video quality of the new video is superior to the video quality of the video.

Further, if the terminal receives the video interpolation information of the video after the video is played, the terminal selects video interpolation information of a video frame included in a non-played video according to the non-played video, and performs a motion interpolation on the non-played video according to the video interpolation information of the video frame included in the non-played video.

Further, if video interpolation information of some video frames included in the video is damaged, the terminal selects video interpolation information of a non-damaged video frame, and performs a motion interpolation on the video according to the selected video interpolation information of the non-damaged video frame.

Further, if a video frame of the video is damaged, the terminal performs a motion interpolation on the video according to the video interpolation information of the video, so that the damaged video frame in the video can be recovered.

In this embodiment of the present invention, an information server that is used to store video interpolation information is arranged in advance, where the information server includes video interpolation information of all videos; and a terminal acquires, from the information server, video interpolation information of a video that needs to be downloaded, and performs a motion interpolation on the video according to the video interpolation information of the video to obtain a new video, so that video quality of the obtained new video is superior to video quality of the original video. Because the information server stores the video interpolation information of all the videos in advance, the terminal is responsible only for receiving the video interpolation information and performing a motion interpolation, thereby reducing calculation complexity of a process in which the terminal performs video quality enhancement.

### Embodiment 6

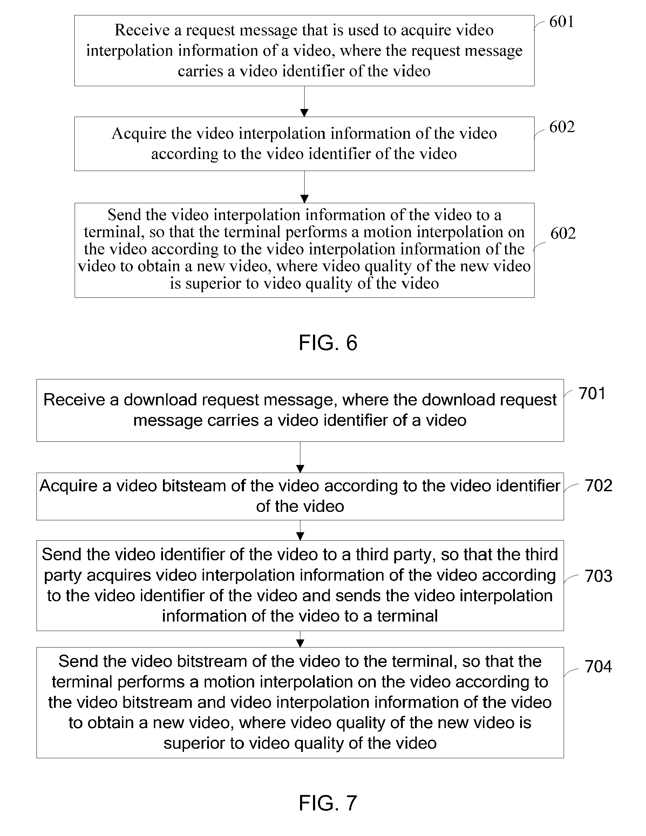

This embodiment of the present invention provides a video quality enhancement method. Referring to FIG. 6, the method includes:
Step 601: Receive a request message that is used to acquire video interpolation information of a video, where the request message carries a video identifier of the video.
Step 602: Acquire the video interpolation information of the video according to the video identifier of the video.
Step 603: Send the video interpolation information of the video to a terminal, so that the terminal performs a motion interpolation on the video according to the video interpolation information of the video to obtain a new video, where video quality of the new video is superior to video quality of the video.

In this embodiment of the present invention, in addition to a download manner, a watching manner such as broadcast on demand, live broadcast, and watching-while-download of a general streaming media video may also be included.

In this embodiment of the present invention, a third party acquires video interpolation information of a video that needs to be downloaded by a terminal, and sends the video interpolation information of the video to the terminal; and the terminal performs a motion interpolation on the video according to the video interpolation information of the video to obtain a new video, where video quality of the obtained new video is superior to video quality of the original video. Because a motion estimation process is implemented on the third party, the terminal implements only a motion interpolation, thereby reducing calculation complexity of a process in which the terminal performs video quality enhancement.

### Embodiment 7

This embodiment of the present invention provides a video quality enhancement method. Referring to FIG. 7, the method includes:
Step 701: Receive a download request message, where the download request message carries a video identifier of a video.
Step 702: Acquire a video bitstream of the video according to the video identifier of the video. Step 703: Send the video identifier of the video to a third party, so that the third party acquires video interpolation information of the video according to the video identifier of the video and sends the video interpolation information of the video to a terminal.
Step 704: Send the video bitstream of the video to the terminal, so that the terminal performs a motion interpolation on the video according to the video bitstream and the video interpolation information of the video to obtain a new video, where video quality of the new video is superior to video quality of the video.

In this embodiment of the present invention, in addition to a download manner, a watching manner such as broadcast on demand, live broadcast, and watching-while-download of a general streaming media video may also be included.

In this embodiment of the present invention, a video stream server acquires a video bitstream of a video that needs to be downloaded by a terminal, and sends the video bitstream of the video to a third party; the third party performs a motion estimation on the video bitstream of the video to obtain video interpolation information of the video and sends the video interpolation information of the video to the terminal; and the terminal performs a motion interpolation on the video according to the video interpolation information of the video to obtain a new video, where video quality of the obtained new video is superior to video quality of the original video. Because a motion estimation process is implemented on the third party, the terminal implements only a motion interpolation, thereby reducing calculation complexity of a process in which the terminal performs video quality enhancement.

### Embodiment 8

This embodiment of the present invention provides a video quality enhancement apparatus.

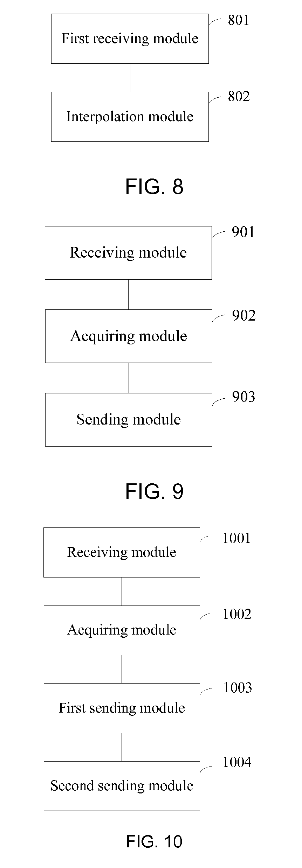

Referring to FIG. 8, the apparatus includes:
a first receiving module 801, configured to receive video interpolation information that is of a video and sent by a third party, where the third party is used to acquire the video interpolation information of the video; and
an interpolation module 802, configured to perform a motion interpolation on the video according to the video interpolation information that is of the video and received by the receiving module to obtain a new video, where video quality of the new video is superior to video quality of the video.

Further, the apparatus further includes:
a sending module 803, configured to send, to the third party, a request message that is used to acquire the video interpolation information, where the request message carries a video identifier of the video, so that the third party acquires the video interpolation information corresponding to the video identifier of the video according to the request message, and sends the video interpolation information corresponding to the video identifier of the video; or
send a download request message to a video stream server, where the download request message carries a video identifier of the video and an identifier that is used to acquire the video interpolation information, so that the video stream server acquires a video bitstream of the video and the video interpolation information according to the download request message; or
send a download request message to a video stream server and send, to the third party, a request message that is used to acquire the video interpolation information, where the download request message carries a video identifier of the video, and the request message that is used to acquire the video interpolation information carries the video identifier of the video, so that the video stream server acquires a video bitstream of the video according to the download request message and sends the video bitstream of the video to a terminal, and the video stream server acquires the video interpolation information of the video according to the request message that is used to acquire the video interpolation information; or
send a download request message to a video stream server, where the download request message carries a video identifier of the video and an address of the third party corresponding to the video, so that the video stream server sends a video bitstream of the video to a terminal and sends the video identifier of the video to the third party, and the third party acquires the video interpolation information of the video according to the video identifier of the video.

The first receiving module 801 is specifically configured to receive video interpolation information that is of a video and sent by the video stream server, where the video interpolation information of the video is the video interpolation information that is of the video, sent by the third party, and received by the video stream server.

Further, the apparatus further includes:
a second receiving module 804, configured to receive a video bitstream that is of the video and sent by the third party, where the video bitstream of the video is the video bitstream that is of the video, sent by the video stream server, and received by the third party.

The interpolation module 802 includes:
a first motion interpolation unit 8021, configured to: if the video interpolation information of the video is received after the video is played, perform a motion interpolation on a non-played video according to video interpolation information of the non-played video;
a second motion interpolation unit 8022, configured to: if video interpolation information of some video frames included in the video is damaged, perform a motion interpolation on the video according to video interpolation information of a non-damaged video frame; or
a third motion interpolation unit 8023, configured to: if a video frame of the video is lost, generate video interpolation information of the lost video frame of the video according to the video interpolation information of the video, and perform a motion interpolation on the video according to the video interpolation information of the lost video frame of the video to recover the lost video frame of the video.

Further, the video interpolation information of the video includes at least a frame sequence number of a video frame, and a motion vector reference direction and a motion vector size of an interpolation block included in the video frame; or
the video interpolation information of the video includes at least a frame sequence number of a video frame, and a motion vector reference direction and a motion vector size of a pixel included in the video frame.

In this embodiment of the present invention, in addition to a download manner, a watching manner such as broadcast on demand, live broadcast, and watching-while-download of a general streaming media video may also be included.

In this embodiment of the present invention, a terminal receives video interpolation information that is of a video and sent by a third party, and performs a motion interpolation on the video according to the video interpolation information of the video to obtain a new video, so that video quality of the obtained new video is superior to video quality of the original video. Because a motion estimation is implemented on the third party, the terminal implements only a motion interpolation process, thereby reducing calculation complexity of a process in which the terminal performs video quality enhancement.

### Embodiment 9

This embodiment of the present invention provides a video quality enhancement apparatus. Referring to FIG. 9, the apparatus includes:
a receiving module 901, configured to receive a request message that is used to acquire video interpolation information of a video, where the request message carries a video identifier of the video;
an acquiring module 902, configured to acquire the video interpolation information of the video according to the video identifier of the video; and
a sending module 903, configured to send the video interpolation information of the video to a terminal, so that the terminal performs a motion interpolation on the video according to the video interpolation information of the video to obtain a new video, where video quality of the new video is superior to video quality of the video.

The acquiring module 902 includes:
a first acquiring unit 9021, configured to query, according to the video identifier of the video, whether the video interpolation information of the video exists in a stored correspondence between a video identifier and video interpolation information, and if it exists, acquire the found video interpolation information of the video; and
a second acquiring unit 9022, configured to: if it does not exist, acquire a video bitstream of the video from a video stream server according to the video identifier of the video, and acquire the video interpolation information of the video according to the video bitstream of the video.

Further, the apparatus further includes:
a storage module 904, configured to store a correspondence between the video identifier and the video interpolation information of the video.

The sending module 903 is specifically configured to send the video interpolation information of the video to the terminal through a video transmission path or a transmission channel to the terminal.

In this embodiment of the present invention, in addition to a download manner, a watching manner such as broadcast on demand, live broadcast, and watching-while-download of a general streaming media video may also be included.

In this embodiment of the present invention, a third party acquires video interpolation information of a video that needs to be downloaded by a terminal, and sends the video interpolation information of the video to the terminal; and the terminal performs a motion interpolation on the video according to the video interpolation information of the video to obtain a new video, where video quality of the obtained new video is superior to video quality of the original video. Because a motion estimation process is implemented on the third party, the terminal implements only a motion interpolation, thereby reducing calculation complexity of a process in which the terminal performs video quality enhancement.

### Embodiment 10

This embodiment of the present invention provides a video quality enhancement apparatus. Referring to FIG. 10, the apparatus includes:
a receiving module 1001, configured to receive a download request message, where the download request message carries a video identifier of a video;
an acquiring module 1002, configured to acquire a video bitstream of the video according to the video identifier of the video;
a first sending module 1003, configured to send the video identifier of the video to a third party, so that the third party acquires video interpolation information of the video according to the video identifier of the video and sends the video interpolation information of the video to a terminal; and
a second sending module 1004, configured to send the video bitstream of the video to the terminal, so that the terminal performs a motion interpolation on the video according to the video bitstream and the video interpolation information of the video to obtain a new video, where video quality of the new video is superior to video quality of the video.

Further, the apparatus further includes:
a querying module 1005, configured to query whether a third party that includes the video interpolation information of the video exists on a cloud, and if it exists, select a third party that includes the video interpolation information of the video; if it does not exist, select a third party from the cloud.

Further, a server further includes:
a third sending module 1006, configured to: if the third party does not obtain the video interpolation information of the video, send the video bitstream of the video to the third party, so that the third party acquires the video interpolation information of the video according to the video bitstream of the video and sends the video interpolation information of the video to the terminal.

In this embodiment of the present invention, in addition to a download manner, a watching manner such as broadcast on demand, live broadcast, and watching-while-download of a general streaming media video may also be included.

In this embodiment of the present invention, a video stream server acquires a video bitstream of a video that needs to be downloaded by a terminal, and sends the video bitstream of the video to a third party; the third party performs a motion estimation on the video bitstream of the video to obtain video interpolation information of the video and sends the video interpolation information of the video to the terminal; and the terminal performs a motion interpolation on the video according to the video interpolation information of the video to obtain a new video, where video quality of the obtained new video is superior to video quality of the original video. Because a motion estimation process is implemented on the third party, the terminal implements only a motion interpolation, thereby reducing calculation complexity of a process in which the terminal performs video quality enhancement.

### Embodiment 11

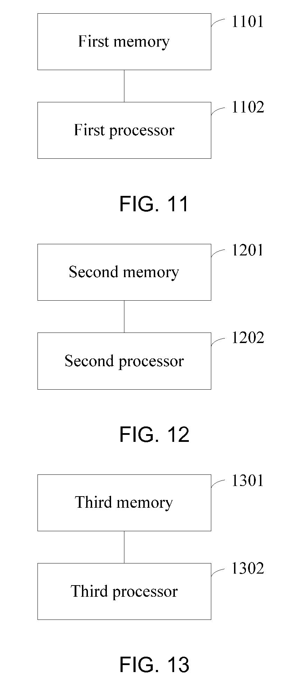

This embodiment of the present invention provides a video quality enhancement apparatus. Referring to FIG. 11, the apparatus includes:
a first memory 1101 and a first processor 1102, configured to perform the following video quality enhancement method:
   receiving video interpolation information that is of a video and sent by a third party, where the third party is used to acquire the video interpolation information of the video; and
   performing a motion interpolation on the video according to the video interpolation information of the video to obtain a new video, where video quality of the new video is superior to video quality of the video.

Before the receiving video interpolation information that is of a video and sent by a third party, the method further includes:
sending, to the third party, a request message that is used to acquire the video interpolation information, where the request message carries a video identifier of the video, so that the third party acquires the video interpolation information corresponding to the video identifier of the video according to the request message, and sends the video interpolation information corresponding to the video identifier of the video; or
sending a download request message to a video stream server, where the download request message carries a video identifier of the video and an identifier that is used to acquire the video interpolation information, so that the video stream server acquires a video bitstream of the video and the video interpolation information according to the download request message; or
sending a download request message to a video stream server and sending, to the third party, a request message that is used to acquire the video interpolation information, where the download request message carries a video identifier of the video, and the request message that is used to acquire the video interpolation information carries the video identifier of the video, so that the video stream server acquires a video bitstream of the video according to the download request message and sends the video bitstream of the video to a terminal, and the video stream server acquires the video interpolation information of the video according to the request message that is used to acquire the video interpolation information; or
sending a download request message to a video stream server, where the download request message carries a video identifier of the video and an address of the third party corresponding to the video, so that the video stream server sends a video bitstream of the video to a terminal and sends the video identifier of the video to the third party, and the third party acquires the video interpolation information of the video according to the video identifier of the video.

The receiving video interpolation information that is of a video and sent by a third party includes:
receiving video interpolation information that is of a video and sent by the video stream server, where the video interpolation information of the video is the video interpolation information that is of the video, sent by the third party, and received by the video stream server.

Before the performing a motion interpolation on the video according to the video interpolation information of the video to obtain a new video, the method further includes:
receiving a video bitstream that is of the video and sent by the third party, where the video bitstream of the video is the video bitstream that is of the video, sent by the video stream server, and received by the third party.

The performing an interpolation on the video according to the video interpolation information of the video to obtain a new video includes:
if the video interpolation information of the video is received after the video is played, performing a motion interpolation on a non-played video according to video interpolation information of the non-played video;
if video interpolation information of some video frames included in the video is damaged, performing a motion interpolation on the video according to video interpolation information of a non-damaged video frame; or
if a video frame of the video is lost or damaged, generating video interpolation information of the lost or damaged video frame of the video according to the video interpolation information of the video, and performing a motion interpolation on the video according to the video interpolation information of the lost or damaged video frame of the video to recover the lost or damaged video frame of the video.

The video interpolation information of the video includes at least a frame sequence number of a video frame, and a motion vector reference direction and a motion vector size of an interpolation block included in the video frame; or
the video interpolation information of the video includes at least a frame sequence number of a video frame, and a motion vector reference direction and a motion vector size of a pixel included in the video frame.

In this embodiment of the present invention, a terminal receives video interpolation information that is of a video and sent by a third party, and performs a motion interpolation on the video according to the video interpolation information of the video to obtain a new video, so that video quality of the obtained new video is superior to video quality of the original video. Because a motion estimation is implemented on the third party, the terminal implements only a motion interpolation process, thereby reducing calculation complexity of a process in which the terminal performs video quality enhancement.

### Embodiment 12

This embodiment of the present invention provides a video quality enhancement apparatus. Referring to FIG. 12, the apparatus includes:
a second memory 1201 and a second processor 1202, configured to perform the following video quality enhancement method:
   receiving a request message that is used to acquire video interpolation information of a video, where the request message carries a video identifier of the video;
   acquiring the video interpolation information of the video according to the video identifier of the video; and
   sending the video interpolation information of the video to a terminal, so that the terminal performs a motion interpolation on the video according to the video interpolation information of the video to obtain a new video, where video quality of the new video is superior to video quality of the video.

The acquiring the video interpolation information of the video according to the video identifier of the video includes:
querying, according to the video identifier of the video, whether the video interpolation information of the video exists in a stored correspondence between a video identifier and video interpolation information, and if it exists, acquiring the found video interpolation information of the video; and
if it does not exist, acquiring a video bitstream of the video from a video stream server according to the video identifier of the video, and acquiring the video interpolation information of the video according to the video bitstream of the video.

After the acquiring the video interpolation information of the video according to the video bitstream of the video, the method further includes:
storing a correspondence between the video identifier and the video interpolation information of the video.

The sending the video interpolation information of the video to a terminal includes:
sending the video interpolation information of the video to the terminal through a video transmission path or a transmission channel to the terminal.

In this embodiment of the present invention, in addition to a download manner, a watching manner such as broadcast on demand, live broadcast, and watching-while-download of a general streaming media video may also be included.

In this embodiment of the present invention, a third party acquires video interpolation information of a video that needs to be downloaded by a terminal, and sends the video interpolation information of the video to the terminal; and the terminal performs a motion interpolation on the video according to the video interpolation information of the video to obtain a new video, where video quality of the obtained new video is superior to video quality of the original video. Because a motion estimation process is implemented on the third party, the terminal implements only a motion interpolation, thereby reducing calculation complexity of a process in which the terminal performs video quality enhancement.

### Embodiment 13

This embodiment of the present invention provides a video quality enhancement apparatus. Referring to FIG. 13, the apparatus includes:
a third memory 1301 and a third processor 1302, configured to perform the following video quality enhancement method:
   receiving a download request message, where the download request message carries a video identifier of a video;
   acquiring a video bitstream of the video according to the video identifier of the video;
   sending the video identifier of the video to a third party, so that the third party acquires video interpolation information of the video according to the video identifier of the video and sends the video interpolation information of the video to a terminal; and
   sending the video bitstream of the video to the terminal, so that the terminal performs a motion interpolation on the video according to the video bitstream and the video interpolation information of the video to obtain a new video, where video quality of the new video is superior to video quality of the video.

Before the sending the video identifier of the video to a third party, the method further includes:
querying whether a third party that includes the video interpolation information of the video exists on a cloud, and if it exists, selecting a third party that includes the video interpolation information of the video; if it does not exist, selecting a third party from the cloud.

After the sending the video identifier of the video to a third party, the method further includes:
if the third party does not obtain the video interpolation information of the video, sending the video bitstream of the video to the third party, so that the third party acquires the video interpolation information of the video according to the video bitstream of the video and sends the video interpolation information of the video to the terminal.

In this embodiment of the present invention, in addition to a download manner, a watching manner such as broadcast on demand, live broadcast, and watching-while-download of a general streaming media video may also be included.

In this embodiment of the present invention, a video stream server acquires a video bitstream of a video that needs to be downloaded by a terminal, and sends the video bitstream of the video to a third party; the third party performs a motion estimation on the video bitstream of the video to obtain video interpolation information of the video and sends the video interpolation information of the video to the terminal; and the terminal performs a motion interpolation on the video according to the video interpolation information of the video to obtain a new video, where video quality of the obtained new video is superior to video quality of the original video. Because a motion estimation process is implemented on the third party, the terminal implements only a motion interpolation, thereby reducing calculation complexity of a process in which the terminal performs video quality enhancement.

A person of ordinary skill in the art may understand that all or a part of the steps of the foregoing embodiments may be implemented by hardware or a program instructing related hardware. The program may be stored in a computer-readable storage medium. The storage medium mentioned above may be a read-only memory, a magnetic disk, or an optical disc, or the like. The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A video quality enhancement method, wherein the method comprises:
receiving video interpolation information that is of a video and sent by a third party, wherein the third party is used to acquire the video interpolation information of the video; and
performing a motion interpolation on the video according to the video interpolation information of the video to obtain a new video, wherein video quality of the new video is superior to video quality of the video.

2. The method according to claim 1, wherein before the receiving video interpolation information that is of a video and sent by a third party, the method further comprises:
sending, to the third party, a request message that is used to acquire the video interpolation information, wherein the request message carries a video identifier of the video, so that the third party acquires the video interpolation information corresponding to the video identifier of the video according to the request message, and sends the video interpolation information corresponding to the video identifier of the video; or
sending a download request message to a video stream server, wherein the download request message carries a video identifier of the video and an identifier that is used to acquire the video interpolation information, so that the video stream server acquires a video bitstream of the video and the video interpolation information according to the download request message; or
sending a download request message to a video stream server and sending, to the third party, a request message that is used to acquire the video interpolation information, wherein the download request message carries a video identifier of the video, and the request message that is used to acquire the video interpolation information carries the video identifier of the video, so that the video stream server acquires a video bitstream of the video according to the download request message and sends the video bitstream of the video to a terminal, and the video stream server acquires the video interpolation information of the video according to the request message that is used to acquire the video interpolation information; or
sending a download request message to a video stream server, wherein the download request message carries a video identifier of the video and an address of the third party corresponding to the video, so that the video stream server sends a video bitstream of the video to a terminal and sends the video identifier of the video to the third party, and the third party acquires the video interpolation information of the video according to the video identifier of the video.

3. The method according to claim 1 or 2, wherein the receiving video interpolation information that is of a video and sent by a third party comprises:
receiving video interpolation information that is of a video and sent by the video stream server, wherein the video interpolation information of the video is the video interpolation information that is of the video, sent by the third party, and received by the video stream server.

4. The method according to any one of claims 1 to 3, wherein before the performing a motion interpolation on the video according to the video interpolation information of the video to obtain a new video, the method further comprises:
receiving a video bitstream that is of the video and sent by the third party, wherein the video bitstream of the video is the video bitstream that is of the video, sent by the video stream server, and received by the third party.

5. The method according to any one of claims 1 to 4, wherein the performing an interpolation on the video according to the video interpolation information of the video to obtain a new video comprises:
if the video interpolation information of the video is received after the video is played, performing a motion interpolation on a non-played video according to video interpolation information of the non-played video;
if video interpolation information of some video frames comprised in the video is damaged, performing a motion interpolation on the video according to video interpolation information of a non-damaged video frame; or
if a video frame of the video is lost or damaged, generating video interpolation information of the lost or damaged video frame of the video according to the video interpolation information of the video, and performing a motion interpolation on the video according to the video interpolation information of the lost or damaged video frame of the video to recover the lost or damaged video frame of the video.

6. The method according to any one of claims 1 to 5, wherein:
the video interpolation information of the video comprises at least a frame sequence number of a video frame, and a motion vector reference direction and a motion vector size of an interpolation block comprised in the video frame; or
the video interpolation information of the video comprises at least a frame sequence number of a video frame, and a motion vector reference direction and a motion vector size of a pixel comprised in the video frame.

7. A video quality enhancement method, wherein the method comprises:
receiving a request message that is used to acquire video interpolation information of a video, wherein the request message carries a video identifier of the video;
acquiring the video interpolation information of the video according to the video identifier of the video; and
sending the video interpolation information of the video to a terminal, so that the terminal performs a motion interpolation on the video according to the video interpolation information of the video to obtain a new video, wherein video quality of the new video is superior to video quality of the video.

8. The method according to claim 7, wherein the acquiring the video interpolation information of the video according to the video identifier of the video comprises:
querying, according to the video identifier of the video, whether the video interpolation information of the video exists in a stored correspondence between a video identifier and video interpolation information, and if it exists, acquiring the found video interpolation information of the video; and
if it does not exist, acquiring a video bitstream of the video from a video stream server according to the video identifier of the video, and acquiring the video interpolation information of the video according to the video bitstream of the video.

9. The method according to claim 8, wherein after the acquiring the video interpolation information of the video according to the video bitstream of the video, the method further comprises:
storing a correspondence between the video identifier and the video interpolation information of the video.

10. The method according to any one of claims 7 to 9, wherein the sending the video interpolation information of the video to a terminal comprises:
sending the video interpolation information of the video to the terminal through a video transmission path or a transmission channel to the terminal.

11. A video quality enhancement method, wherein the method comprises:
receiving a download request message, wherein the download request message carries a video identifier of a video;
acquiring a video bitstream of the video according to the video identifier of the video;
sending the video identifier of the video to a third party, so that the third party acquires video interpolation information of the video according to the video identifier of the video and sends the video interpolation information of the video to a terminal; and
sending the video bitstream of the video to the terminal, so that the terminal performs a motion interpolation on the video according to the video bitstream and the video interpolation information of the video to obtain a new video, wherein video quality of the new video is superior to video quality of the video.

12. The method according to claim 11, wherein before the sending the video identifier of the video to a third party, the method further comprises:
querying whether a third party that comprises the video interpolation information of the video exists on a cloud, and if it exists, selecting a third party that comprises the video interpolation information of the video; and if it does not exist, selecting a third party from the cloud.

13. The method according to claim 11 or 12, wherein after the sending the video identifier of the video to a third party, the method further comprises:
if the third party does not obtain the video interpolation information of the video, sending the video bitstream of the video to the third party, so that the third party acquires the video interpolation information of the video according to the video bitstream of the video and sends the video interpolation information of the video to the terminal.

14. A video quality enhancement apparatus, wherein the apparatus comprises:
a first receiving module, configured to receive video interpolation information that is of a video and sent by a third party, wherein the third party is used to acquire the video interpolation information of the video; and
an interpolation module, configured to perform a motion interpolation on the video according to the video interpolation information of the video to obtain a new video, wherein video quality of the new video is superior to video quality of the video.

15. The apparatus according to claim 14, wherein the apparatus further comprises:
a sending module, configured to send, to the third party, a request message that is used to acquire the video interpolation information, wherein the request message carries a video identifier of the video, so that the third party acquires the video interpolation information corresponding to the video identifier of the video according to the request message, and sends the video interpolation information corresponding to the video identifier of the video; or
send a download request message to a video stream server, wherein the download request message carries a video identifier of the video and an identifier that is used to acquire the video interpolation information, so that the video stream server acquires a video bitstream of the video and the video interpolation information according to the download request message; or
send a download request message to a video stream server and send, to the third party, a request message that is used to acquire the video interpolation information, wherein the download request message carries a video identifier of the video, and the request message that is used to acquire the video interpolation information carries the video identifier of the video, so that the video stream server acquires a video bitstream of the video according to the download request message and sends the video bitstream of the video to a terminal, and the video stream server acquires the video interpolation information of the video according to the request message that is used to acquire the video interpolation information; or
send a download request message to a video stream server, wherein the download request message carries a video identifier of the video and an address of the third party corresponding to the video, so that the video stream server sends a video bitstream of the video to a terminal and sends the video identifier of the video to the third party, and the third party acquires the video interpolation information of the video according to the video identifier of the video.

16. The apparatus according to claim 14 or 15, wherein
the first receiving module is specifically configured to receive video interpolation information that is of a video and sent by the video stream server, wherein the video interpolation information of the video is the video interpolation information that is of the video, sent by the third party, and received by the video stream server.

17. The apparatus according to any one of claims 14 to 16, wherein the apparatus further comprises:
a second receiving module, configured to receive a video bitstream that is of the video and sent by the third party, wherein the video bitstream of the video is the video bitstream that is of the video, sent by the video stream server, and received by the third party.

18. The apparatus according to any one of claims 14 to 17, wherein the interpolation module comprises:
a first motion interpolation unit, configured to: if the video interpolation information of the video is received after the video is played, perform a motion interpolation on a non-played video according to video interpolation information of the non-played video;
a second motion interpolation unit, configured to: if video interpolation information of some video frames comprised in the video is damaged, perform a motion interpolation on the video according to video interpolation information of a non-damaged video frame; or
a third motion interpolation unit, configured to: if a video frame of the video is lost, generate video interpolation information of the lost video frame of the video according to the video interpolation information of the video, and perform a motion interpolation on the video according to the video interpolation information of the lost video frame of the video to recover the lost video frame of the video.

19. The apparatus according to anyone of claims 14 to 18, wherein:
the video interpolation information of the video comprises at least a frame sequence number of a video frame, and a motion vector reference direction and a motion vector size of an interpolation block comprised in the video frame; or
the video interpolation information of the video comprises at least a frame sequence number of a video frame, and a motion vector reference direction and a motion vector size of a pixel comprised in the video frame.

20. A video quality enhancement apparatus, wherein the apparatus comprises:
a receiving module, configured to receive a request message that is used to acquire video interpolation information of a video, wherein the request message carries a video identifier of the video;
an acquiring module, configured to acquire the video interpolation information of the video according to the video identifier of the video; and
a sending module, configured to send the video interpolation information of the video to a terminal, so that the terminal performs a motion interpolation on the video according to the video interpolation information of the video to obtain a new video, wherein video quality of the new video is superior to video quality of the video.

21. The apparatus according to claim 20, wherein the acquiring module comprises:
a first acquiring unit, configured to query, according to the video identifier of the video, whether the video interpolation information of the video exists in a stored correspondence between a video identifier and video interpolation information, and if it exists, acquire the found video interpolation information of the video; and
a second acquiring unit, configured to: if it does not exist, acquire a video bitstream of the video from a video stream server according to the video identifier of the video, and acquire the video interpolation information of the video according to the video bitstream of the video.

22. The apparatus according to claim 21, wherein the apparatus further comprises:
a storage module, configured to store a correspondence between the video identifier and the video interpolation information of the video.

23. The apparatus according to any one of claims 20 to 22, wherein
the sending module is specifically configured to send the video interpolation information of the video to the terminal through a video transmission path or a transmission channel to the terminal.

24. A video quality enhancement apparatus, wherein the apparatus comprises:
a receiving module, configured to receive a download request message, wherein the download request message carries a video identifier of a video;
an acquiring module, configured to acquire a video bitstream of the video according to the video identifier of the video;
a first sending module, configured to send the video identifier of the video to a third party, so that the third party acquires video interpolation information of the video according to the video identifier of the video and sends the video interpolation information of the video to a terminal; and
a second sending module, configured to send the video bitstream of the video to the terminal, so that the terminal performs a motion interpolation on the video according to the video bitstream and the video interpolation information of the video to obtain a new video, wherein video quality of the new video is superior to video quality of the video.

25. The apparatus according to claim 24, wherein the apparatus further comprises:
a querying module, configured to query whether a third party that comprises the video interpolation information of the video exists on a cloud, and if it exists, select a third party that comprises the video interpolation information of the video; and if it does not exist, select a third party from the cloud.

26. The apparatus according to claim 24 or 25, wherein the apparatus further comprises:
a third sending module, configured to: if the third party does not obtain the video interpolation information of the video, send the video bitstream of the video to the third party, so that the third party acquires the video interpolation information of the video according to the video bitstream of the video and sends the video interpolation information of the video to the terminal.

27. A video quality enhancement apparatus, wherein the apparatus comprises a first memory and a first processor, configured to perform the video quality enhancement method according to any one of claims 1 to 6.

28. A video quality enhancement apparatus, wherein the apparatus comprises a second memory and a second processor, configured to perform the video quality enhancement method according to any one of claims 7 to 10.

29. A video quality enhancement apparatus, wherein the apparatus comprises a third memory and a third processor, configured to perform the video quality enhancement method according to any one of claims 11 to 13.
